# EUROPEAN PATENT SPECIFICATION

(11) **EP 4 231 042 B1**
(45) Date of publication and mention of the grant of the patent: **09.07.2025**
(21) Application number: 22158073.1
(22) Date of filing: 22.02.2022
(51) Int. Cl.: G01S 7/03, G01S 13/00, G01S 7/02, H01Q 19/10, H01Q 15/16, H01Q 15/18, H01Q 15/14, G01S 13/04, G01S 13/56

(54) **RADAR SYSTEM, DEVICE COMPRISING A RADAR SYSTEM AND METHOD FOR OPERATING A RADAR SYSTEM**
RADARSYSTEM, VORRICHTUNG MIT EINEM RADARSYSTEM UND VERFAHREN ZUM BETRIEB EINES RADARSYSTEMS
SYSTÈME RADAR, DISPOSITIF COMPRENANT UN SYSTÈME RADAR ET PROCÉDÉ POUR FAIRE FONCTIONNER UN SYSTÈME RADAR

(43) Date of publication of application: 23.08.2023
(73) Proprietor: Infineon Technologies AG, 85579 Neubiberg (DE)
(72) Inventor: DORFNER, Andreas, 81927 München (DE); FRANK, Martin, 82008 Unterhaching (DE)
(74) Representative: 2SPL Patentanwälte PartG mbB

(56) References cited:
- CN-U- 202 395 161
- DE-A1- 102017 218 823
- DE-A1- 2 348 155

## Description

### Field

The present disclosure relates to radar. Examples relate to a radar system, a device comprising a radar system and a method for operating a radar system.

### Background

DE 102017218823 A1, which forms the closest prior art, proposes an arrangement for scanning a space by means of visible or invisible radiation. In a first variant, the arrangement comprises a movable element, a radiation source and a deflecting element along a central axis. The movable element comprises a MEMS mirror which is rotatable and/or tiltable with respect to the central axis. Alternatively, the radiation source can be integrated into the movable integrated in the movable element.

DE 23 48 155 A1 proposes an omnidirectional antenna system for a radar device monitoring movement of an object in an area under surveillance comprising a dielectric rod projecting from a waveguide horn, the projecting end of the rod carrying a conical reflector whose tip is directed towards the horn, the edge of the horn having a flange at whose periphery there is a frusto-conical surface extending away from the reflector, the flange and surface forming part of the housing of the device. Said rod is graduated in step-wise manner within the waveguide and extends out of the horn in a portion which is of circular cross-section. At the free end of the rod there is a conical reflector.

CN 202 395 161 U proposes a high power beamforming vehicle-mounted antenna with a two-stage structure, comprising a plurality of groups of symmetrically-arranged vehicle-mounted communication antennas with same structures, wherein each pair of vehicle-mounted communication antennas comprise a circular polarizer, a millimeter wave cone horn antenna arranged above the circular polarizer and mutually connected with the circular polarizer, a lens arranged horizontally above the millimeter wave cone horn antenna, and a reflection plate arranged obliquely above the lens.

A radar system typically has a limited field of view which does not cover a detection range of more than 120° around the radar system with a single radar sensor. Besides, some applications may require a radar system to exclude certain parts of the field of view from detection. Hence, there may be a demand for improved radar sensing.

### Summary

The demand may be satisfied by the subject matter of the appended claims.

An example relates to a radar system comprising a radar sensor. The radar sensor comprises an antenna configured to emit a radar beam towards a predefined region. The radar system further comprises a reflector spaced apart from the radar sensor and symmetrical with respect to a line of symmetry or a plane of symmetry. The line of symmetry or the plane of symmetry is parallel to a beam axis of the radar beam. The line of symmetry or the plane of symmetry is displaced with respect to a phase center of the antenna. The reflector is configured to redirect at least part of the radar beam towards a target region different from the predefined region. The reflector is further configured to redirect a reflection of the radar beam originating from the target region onto the radar sensor.

Another example relates to an electronic device comprising a radar system as described herein and control circuitry configured to control an operation of the electronic device based on an output signal of the radar system.

Another example relates to a method for operating a radar system comprising a radar sensor and a reflector spaced apart from the radar sensor and symmetrical with respect to a line of symmetry or a plane of symmetry. The method comprises emitting, at an antenna of the radar sensor, a radar beam towards a predefined region. The line of symmetry or the plane of symmetry is parallel to a beam axis of the radar beam. The line of symmetry or the plane of symmetry is displaced with respect to a phase center of the antenna. The method further comprises redirecting, using the reflector, the radar beam towards a target region different from the predefined region, and redirecting, using the reflector, a reflection of the radar beam originating from the target region onto the radar sensor.

### Brief description of the Figures

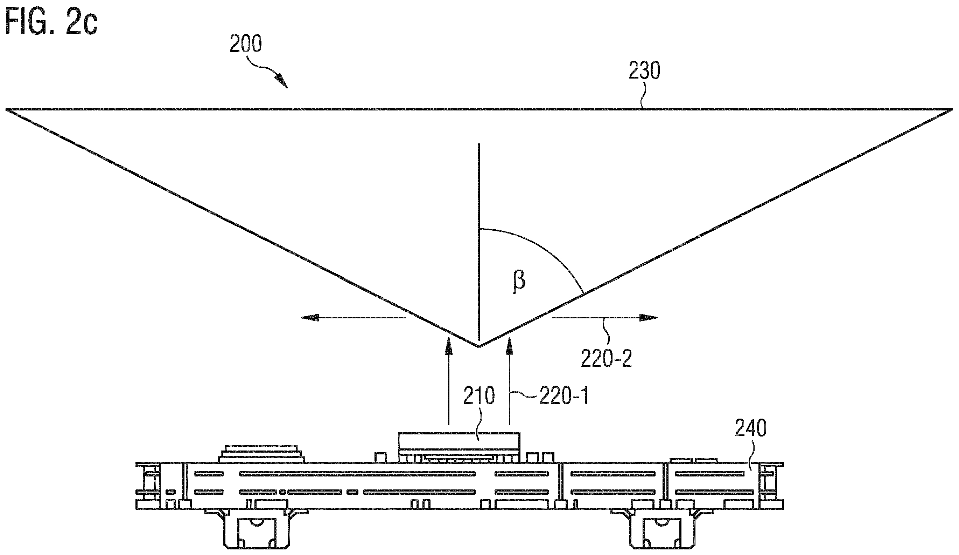

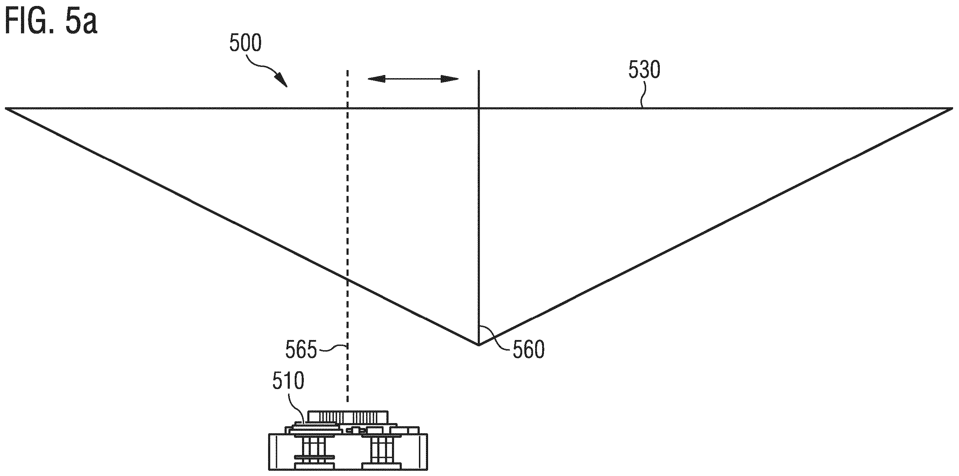

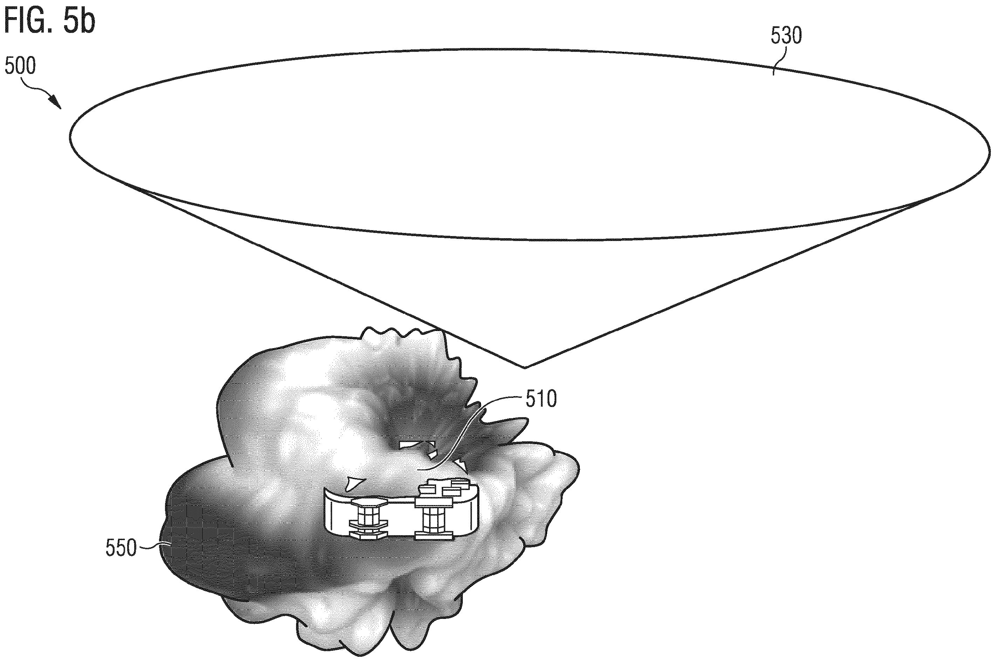

Some examples of apparatuses and/or methods will be described in the following by way of example only, and with reference to the accompanying figures, in which in particular the embodiment of figures 5a and 5b form the embodiment of the invention as claimed; the embodiments in figures 2c, 2d, 3a-4 are comparative examples useful for understanding the invention but not forming part of the invention as claimed.
Fig. 1a, Fig. 1b illustrate an example of a radar system with an exemplary transmission path and an exemplary receiving path;
Fig. 2a to Fig. 2f illustrate another example of a radar system with and without a reflector, a respective three-dimensional radiation pattern and a respective polar diagram of a radar radiation of the radar system;
Fig. 3a to Fig. 3c illustrate another example of a radar system with differing exemplary redirection angles;
Fig. 4 illustrates another example of a radar system with a partial redirection of a radar beam;
Fig. 5a to Fig. 5c illustrate another example of a radar system with a displaced reflector, a corresponding three-dimensional radiation pattern and polar diagram of a radar radiation of the radar system;
Fig. 6a to Fig. 6c illustrate another example of a radar system with a prismatic reflector, a corresponding three-dimensional radiation pattern and polar diagram of a radar radiation of the radar system, not forming part of the invention;
Fig. 7 illustrates an example of an electronic device comprising a radar system; and
Fig. 8 illustrates a flowchart of an example of a method for operating a radar system.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

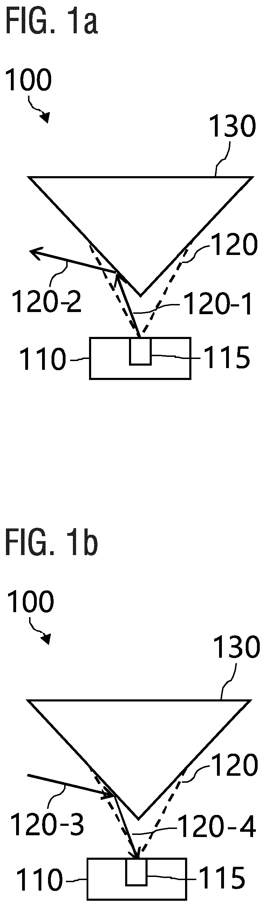

**Fig. 1a** and **Fig. 1b** illustrate a schematic representation of an example of a radar system 100. The radar system 100 comprises a radar sensor 110. The radar sensor 110 may be any device suitable for emitting and receiving a radio-frequency electromagnetic signal, i.e., a radar transceiver. The radar sensor 110 comprises an antenna 115 for radiating a radar beam 120. The antenna 115 may be a conductor of any kind capable of converting wire-bound electric energy into a free-propagating radar wave. For instance, the antenna 115 may be a patch-antenna integrated into the radar sensor 110.

The antenna 115 is configured to emit the radar beam 120 towards a predefined region. For instance, the antenna 115 may be a directional antenna such as a phased-array antenna, which allows the radiation power to be concentrated onto a certain direction, yielding an increased radar signal strength in a certain area (the predefined region) extending along the said direction. The predefined region may correspond to a field of view of the radar sensor 110 when operated as a standalone system. In other words, the predefined region may be considered a detection zone for which the radar sensor 110 per se (without the reflector explained below) exhibits a sufficient sensitivity to accomplish a certain radar task.

The radar beam 120 emitted by the antenna 115 shall not be understood as a beam in an optical sense. The radar beam 120 may rather correspond to a main lobe of the radar radiation, thus, describe a portion of the entire radar radiation emitted by the antenna 115 with a higher field strength compared to other lobes which appear in a radiation pattern of the antenna 115. The radar beam 120 may exhibit any three-dimensional shape. For instance, the radar beam 120 may exhibit a conical shape or a cone section through which the radar radiation propagates. The antenna 115 may exhibit a phase center or apparent phase center from which the radar beam 120 spreads spherically outward. Fig. 1a illustrates an exemplary transmission path of the radar beam 120 and Fig. 1b illustrates an exemplary receiving path of a reflection of the radar beam 120.

An exemplary first trajectory 120-1 of the radar beam 120 is illustrated by the transmission path of Fig. 1a. The first trajectory 120-1 in the sense of the present disclosure may be considered a field vector of a partial energy flow of the radar beam 120 which is perpendicular to a radar wavefront of the radar beam 120. The first trajectory 120-1 emanates from a phase center of the antenna 115 and points to a direction towards the predefined region.

The radar system 100 further comprises a reflector 130 spaced apart from the radar sensor 110. The distance between the antenna 115 and the reflector 130 may be selected according to requirements of the target application, e.g., according to an operating frequency of the radar sensor 110. On the one hand, a maximum distance (e.g., 5cm) between the reflector 130 and the antenna 115 may be specified such that a size of the reflector 130 (which may be selected according to the distance) is suitable for the target application and that an efficiency loss of the radar sensor 110 is acceptable for the target application. On the other hand, the reflector 130 may be arranged relative to the antenna 115 such that a minimum distance between the antenna 115 and the reflector 130 is met. This minimum distance may be required to ensure that the reflector 130 is placed in the far field of the antenna 115, i.e., to ensure that the radar beam 120 propagates in a certain free space without disturbance. The minimum distance may depend on the operating frequency of the radar sensor 110 and physical dimensions of the antenna 115.

The reflector 130 may be any structure with a surface reflective for a partial or entire radar frequency range of the radar beam 120. The reflector 130 may be selected according to a desired reflection behavior of its surface. For instance, the reflector 130 may comprise an outer surface configured to redirect the at least part of the radar beam 120. At least the outer surface of the reflector 130 may be metallic. The surface may be metallic to cause a reflection of an incident part of the radar beam 120. In some examples, the reflector 130 may be formed as a solid metal piece. For high-frequency radar applications, a thin metal layer may be sufficient to provide a suitable reflection behavior, i.e., the reflector 130 may be fabricated of any material such as a polymer by, e.g., 3D-printing or injection molding, and covered by a metallic coating or foil. This may reduce the weight and the production cost of the reflector 130. The (outer) surface of the reflector 130 may preferably be even for improving the reflection behavior. In some examples, the surface of the reflector 130 may exhibit a metallic grid structure. This may be advantageous for applications where the reflector 130 is required to be partly optical transparent, e.g., in cases where the reflector 130 is implemented into a layer of a display.

The reflector 130 is configured to redirect at least part of the radar beam 120 towards a target region different from the predefined region. The reflector 130 redirects such parts of the beam which impinge on a surface of the reflector 130. The share of radiation power being redirected by the reflector 130 may depend, among other things, on at least one of the extent of the reflector 130, the distance between the reflector 130 and the phase center of the antenna 115, and the beam width of the radar beam 120. For instance, in cases where the reflector 130 - different from the one shown in Fig. 1a and Fig. ab - spatially covers only part of a beamwidth of the radar beam 120 (i.e., an extent of the radar beam 120 measured along a wavefront of the radar beam 120), the reflector 130 may redirect only a certain portion of the radar beam 120 towards the target region, such as at least 80% or 90% of the entire power of the radar beam 120, and let pass the remaining portion of the radar beam 120 towards the predefined region. This may lead to a remaining sensitivity of the radar system 100 for the predefined region which may be advantageous for applications where a target object located in the predefined region or the target region shall be detectable. However, in some examples such as the example shown in Fig. 1 and Fig. 1b, the reflector 130 spatially extends over an entire beamwidth of the radar beam 120 and may, therefore, redirect substantially the entire radar beam 120 towards the target region. The latter may especially be beneficial for applications where objects in the predefined region shall be explicitly excluded from detection or where the radiation power spread over the target region shall be increased.

The redirection of the radar beam 120 is based on reflection at a surface of the reflector 130, thus, an angle of reflection between the surface of the reflector 130 and a redirected trajectory may correspond to an angle of incidence between the surface of the reflector 130 and an impinging trajectory. Consequently, the shape of the reflector 130 and the position of the reflector 130 relative to the radar beam 120 may be selected according to a desired shape and position of the target region. The selection of the reflector 130 for matching a certain application may be independent of an operating frequency of the radar sensor 110. The reflector 130 may, therefore, introduce no limitations regarding a bandwidth and may be used in wideband operations. The design of the reflector 130 may easily be transferred to any other configuration of a radar system according to the present disclosure. The shape of the reflector 130 may be independent of a specific antenna type. Thus, the radar system 100 may be adjustable to a wide variety of applications requiring different operation frequencies or antenna types.

By way of illustration, the reflector 130 is illustrated by a triangular symbol in Fig. 1a and Fig. 1b. It is to be noted that, independently from the illustration of Fig. 1a and Fig. 1b, the reflector 130 may be of any shape suitable for redirecting the radar beam 120 to the target region. In some examples, the reflector 130 tapers towards the radar sensor 110. The reflector 130 may taper in an apex or edge towards the radar sensor 110 such that, ideally, no part of the initial radar beam 120 or only a negligibly small portion of the radar beam 120 (e.g., less than 1%) impinging on the surface of the reflector 130 is directly reflected back to the radar sensor 110. In other words, an angle of incidence between the radar beam 120 and the surface of the reflector 130 may differ, e.g., by more than 0,1% from 90°. This may prevent direct reflections and, thus, a potentially undesirable increase of sensitivity of the radar system 100 to false targets or vibrations, or a reduction of sensitivity to the actual target.

In some examples, the reflector 130 tapers towards an apex or an edge oriented towards the radar sensor 110. For instance, the reflector 130 may exhibit a conical or pyramidal shape with an apex or a prismatic shape with an edge pointing towards the radar sensor 110. The reflector 130 may be designed such that the tapering, i.e., a tip or edge pointing towards the radar sensor 110, is sharp enough to prevent or sufficiently reduce the aforesaid direct reflections.

The reflector 130 or, in particular, a surface of the reflector 130 may be symmetrical with respect to a line of symmetry or a plane of symmetry. The reflector 130 may exhibit a shape of, e.g., a cone, pyramid, or prism with a symmetrical base plane such as provided by a regular pyramid, a regular prism, or a circular cone. The line of symmetry or the plane of symmetry may run through a point of symmetry of the base plane and an apex or edge of the reflector 130. The line of symmetry or the plane of symmetry is parallel to a beam axis of the radar beam 120. The beam axis may be understood as imaginary line through the phase center of the antenna 115 and the centroid of a wavefront of the radar beam 120. Such a symmetrical structure of the reflector 130 may enable a uniform distribution of radiation power over the target region.

An orientation or position of the reflector 130 differs from the one shown in Fig. 1a or Fig. 1b, i.e., a line of symmetry or plane of symmetry of the reflector 130 is displaced with respect to the phase center of the antenna 115. The latter may lead to a spreading of radiation power outwards from a certain side of the apex or edge of the reflector 130, i.e., the target region may be restricted to said side.

It is to be noted that any feature of the radar system 100 referring to a geometric concept, such as symmetry, parallelism, orthogonality, flatness, straightness, or to a geometric shape is to be understood within the limits of manufacturing or mounting tolerances.

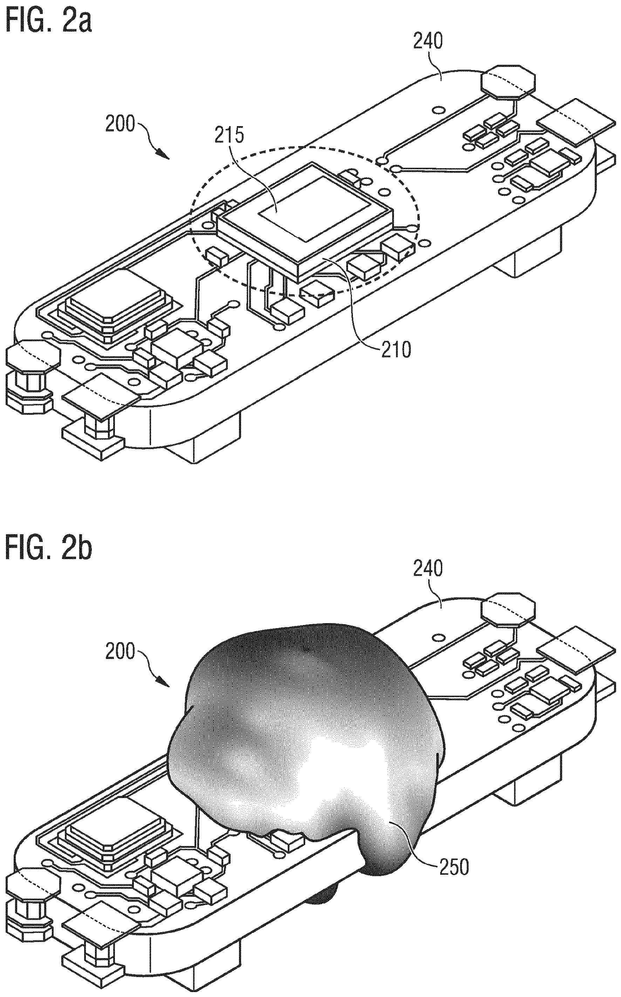

For further elaborating on the shape, size, and position of a reflector in accordance with the present disclosure, further examples are explained with reference to figures below such as Fig. 2a to Fig. 2f, Fig. 3a to Fig. 3c and Fig. 4.

Referring back to Fig. 1a, the reflector 130 deviates the first trajectory 120-1 towards the predefined region when it impinges on the surface of the reflector 130. The deviation causes the first trajectory 120-1 to continue the transmission path along a second trajectory 120-2. The second trajectory 120-2 emanates from an impact point on the surface of the reflector 130 (where the first trajectory 120-1 impinges) and points to the target region.

The target region may be considered a synthetic field of view of the radar system 100 which differs from the original field of view of the radar sensor 110. The synthetic field of view results from the redirection of the part of the radar beam 120. The redirection of the radar beam 120 may enable a spatial shift of the detectable region of the radar sensor 110. The target region may be considered a detection zone for which the radar sensor 110 in combination with the reflector 130 exhibits a desirable sensitivity or accuracy for accomplishing a certain radar task. In case only part of the radar beam 120 is redirected by the reflector 130, the radar system 100 may maintain a sensitivity for at least part of the original field of view of the radar sensor 110.

The target region is different from the predefined region in a sense that the target region at least includes any region outside the predefined region. In other words, the target region may be partly overlapping or may entirely be outside the predefined region. The target region may be of any shape or size and may include several separated subregions. For instance, the target region may comprise two subregions which are opposing with respect to a phase center of the antenna 115. In some examples, the target region may extend over at least 120° along a plane parallel to an emitting surface of the antenna 115 when viewed from a phase center of the antenna 115. The emitting surface may correspond to an orientation of the radar sensor 110, e.g., a radar sensor facing vertically upwards may have a horizontal emitting surface. A typical radar sensor may have a field of view limited to an angular range of up to approximately 120° which may be mainly due to the antenna design. The radar sensor 110 combined with the reflector 130 may widen up this limited angular range. In radar applications where an angular range of more than 120° shall be covered, the radar system 100 be a more cost-effective alternative to using multiple radar sensors.

In a concrete application, the radar sensor 110 may be placed along a horizontal plane and facing upwards causing the main radiation of the radar beam 120 accordingly facing upwards. The predefined region would then be located above the radar sensor 110. However, the application may require a detection of objects in an angular range of 360° horizontally around the radar sensor 110. A shape, material, and position of the reflector 130 may be designed for matching this requirement of the application. For instance, the reflector 130 may be placed centered above the phase center of the radar sensor 110. Additionally, the reflector 130 may be constructed symmetrically with respect to the phase center to evenly distribute the radar power of the redirected radar radiation over the angular range of 360°. The latter may ensure that no spatial angle will be preferred.

In the example of Fig. 1a, the second trajectory 120-2 is tilted by approximately 120° with respect to the first trajectory 120-1 which may lead to a thereto corresponding spatial shift of the target region. Hence, an imaginary line between the phase center of the antenna 115 and the tip of the first trajectory 120-1 (pointing towards the predefined region) may be tilted by approximately 30° degrees with respect to an imaginary line between the phase center and the tip of the second trajectory 120-1 (pointing towards the target region).

In other examples, the tilt angle between a trajectory of the radar beam 120 and the redirected counterpart of the trajectory may be different than the one shown in Fig. 1a. In some examples, an imaginary line between the phase center of the antenna 115 and any boundary point of the predefined region is tilted by at least 10 degrees with respect to an imaginary line between the phase center and any boundary point of the target region. The tilt angle may be determined by the angle of incidence for trajectories of the radar beam 120 impinging on the reflector 130. More specifically, the tilt angle may be (mainly) determined by a shape and position of the reflector 130 relative to the phase center of the antenna 115. The tilt angle of the target region with respect to the predefined region may, on the one hand, exclude from detection a first solid angle (at least parts of the predefined region) viewed from the phase center of the antenna 115 and, on the other hand, include a second solid angle range (the target region) into detection. Thus, the detectable region of the radar system 100 may be shifted beyond the boundary of the original field of view of the radar sensor 110.

The reflector 130 is further configured to redirect a reflection of the radar beam 120 originating from the target region onto the radar sensor 110. This is illustrated by the receiving path of Fig. 1b. Assuming the second trajectory 120-2 of Fig. 1a (or any other trajectory of the radar beam 120) impinges on an object within the target region, the trajectory 120-2 may reflect off of the object, yielding a third trajectory 120-3 which represents said reflection. Thus, the third trajectory 120-3 emanates from the impact point on a surface of the object and points back to the reflector 130. When the third trajectory 120-3 impinges on the reflector 130, it is, in turn, deviated by the reflector 130 towards the radar sensor 110, yielding a fourth trajectory 120-4 representing said deviation. The trajectories 120-1, 120-2, 120-3, 120-4 of Fig. 1a and Fig. 1b are used for illustrative purposes. In other examples, the second trajectory 120-2 may cross the target region without impinging on a target, thus, no reflection or redirection in form of the third and fourth trajectory 120-3, 120-4 may occur. The radar beam 120 may, furthermore, include further trajectories pointing towards the predefined region in different directions than the one of the first trajectory 120-1. Even though the transmission path and the receiving path of the radar system 100 are illustrated separately in Fig. 1a and Fig. 1b, the radar system 100 may simultaneously transmit and receive the radar beam 120 and its reflection.

For receiving the reflection of the radar beam 120, the radar system 100 may comprise a second antenna, i.e., the radar sensor 110 may be a bistatic radar sensor, or the emitting antenna 115 additionally serves as receiving antenna, i.e., the radar sensor 110 may be a monostatic radar sensor. In the latter case, the reflector 130 would redirect the reflection of the radar beam 120 onto the aforesaid emitting antenna 115.

In case of a bistatic concept with two separate antennas for transmitting the radar beam 120 and receiving its reflection, it may be necessary to adapt the shape and position of the reflector 130 to prevent that a mismatch between the transmission path and the receiving path occurs. This issue may be solved by placing the reflector 130 in a larger distance to the radar sensor 110 such that a distance of the receiving antenna 115 and the transmitting antenna is negligible compared to the distance between the radar sensor 110 and the reflector 130, i.e., the position of both antennas may be approximately equal. It may be necessary in such cases to select a larger reflector compared to one of a monostatic concept. Consequently, a monostatic radar sensor may be preferable for applications requiring compactness.

The radar system 100 may be applicable to several radar scenarios. For instance, the radar sensor 110 may be configured to determine, based on the reflection of the radar beam 120, at least one of presence, a movement (e.g., a velocity), and a distance of an object in an environment of the radar system 100. The radar sensor 110 may, e.g., detect presence or motion of a person in a surrounding of the radar system 100. A distance between the radar system 100 and an object may be determined, e.g., by using FSK (frequency-shift keying) or FMCW (frequency-modulated continuous wave) modulation.

The radar system 100 may enable a simple and cost-effective adjustment of a field of view of the radar sensor 110 to requirements of a particular radar application. For example, in applications where an angular range of detection, e.g., over 120°, is desirable, the radar system 100 may provide a low-cost solution for widening up the original angular range of the radar sensor 110. Or, in case the radar sensor 110 is integrated into a device and - due to design considerations of the device - exhibits an orientation or position which by itself is impractical for the radar task, e.g., when objects in a region outside a field of view of the radar sensor 110 shall be detected, a suitable deployment of the reflector 130 may, however, enable the fulfillment of the radar task. In particular, the radar system 100 may enable a lateral detection of objects, i.e., a detection of objects which are located to a side of the radar sensor 110 with respect to its orientation. In simple terms, the radar system 100 may detect objects which are located in a "blind spot" of the radar sensor 110, thus, in a region which is not directly available for detection by the radar sensor 110 itself. Additionally, the radar system 100 may explicitly exclude parts of the field of view of the radar sensor 110 from detection without substantially worsen its power efficiency.

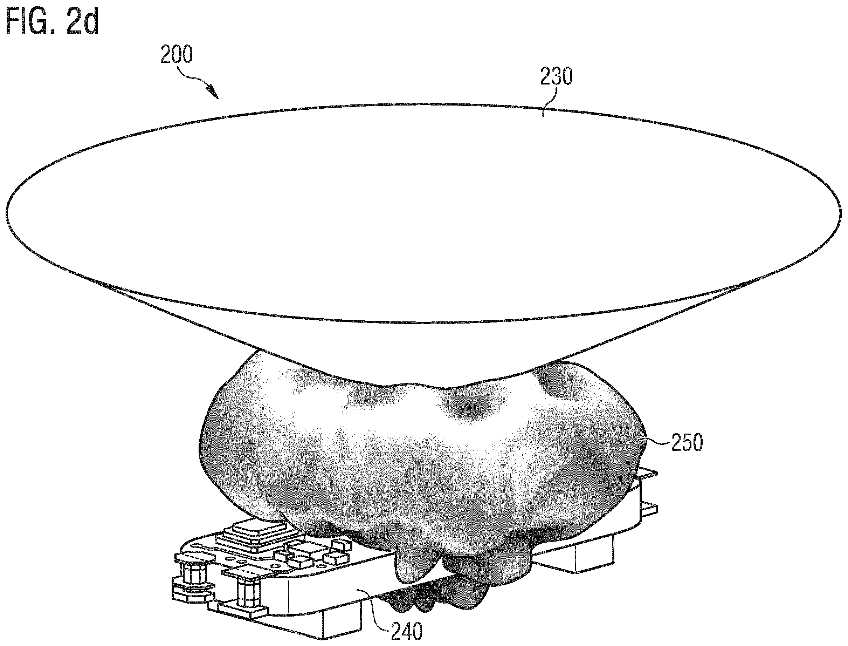

**Fig. 2a** to **Fig. 2d** illustrate an example of a radar system 200 wherein Fig. 2a, Fig. 2b and Fig. 2d show an oblique top view of the radar system 200 and Fig. 2c show a side view of the radar system 200. The radar system 200 comprises a radar sensor 210 which is mounted on a printed circuit board 240. The radar sensor 210 comprises a monostatic antenna 215 configured to emit a radar beam towards a predefined region. The radar sensor 210 comprises an emitting surface which is configured to emit the radar beam. The emitting surface is a surface of the radar sensor 210 from which the antenna 215 radiates the radar beam. In Fig. 2a to Fig. 2d, the emitting surface faces vertically upwards.

For illustrating the effect of the deployment of a reflector 230 on the operation of the radar system 200, Fig. 2a and Fig. 2b show the radar system 200 without the reflector 230 whereas Fig. 2c and Fig. 2d show the radar system 200 with the reflector 230. The reflector 230 is a rotationally symmetrical cone placed in a centered position above the antenna 215 and tapering towards the antenna 215. A minimum distance between the reflector 230 and the antenna 215 may be, e.g., 2,5mm. A maximum distance between the reflector 230 and the antenna 215 may be 5cm. The cone angle β may be approximately 60°. The reflector 230 is configured to redirect part of the radar beam, e.g., a vertical trajectory 220-1 of the radar beam, towards a target region. The reflector 230 deviates the trajectory 220-1 in an angle of approximately 90° towards the target region, yielding a horizontal trajectory 220-2. The target region may, thus, extend in a horizontal plane around the radar sensor 210. The reflector 230 is further configured to redirect a reflection (not shown) of the radar beam originating from the target region onto the radar sensor 210.

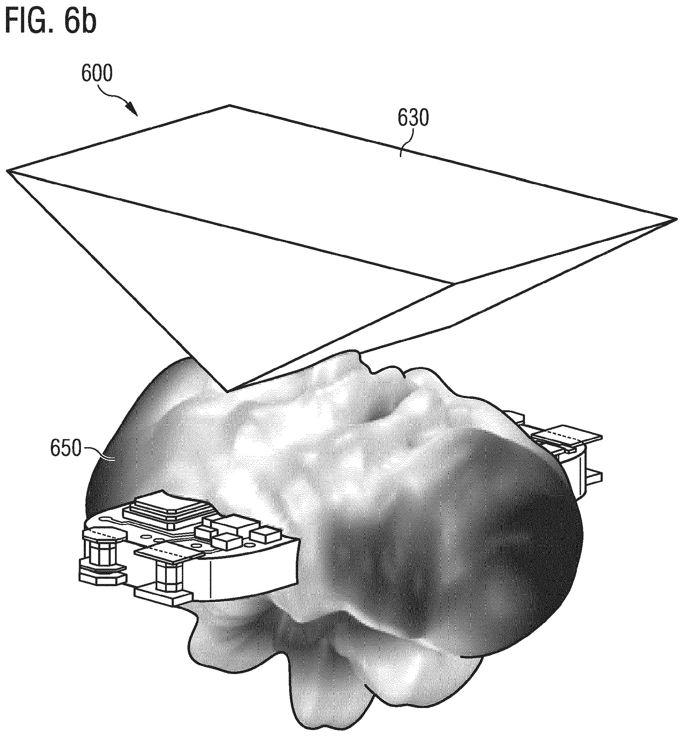

Fig. 2b and Fig. 2d show an example of a three-dimensional radiation pattern 250 of the radar sensor 210 for an operating frequency of 61 GHz. The radiation pattern 250 is a simulation of the dependence of the field strength of the radar beam on the direction of its spatial power flow starting from an origin of the radar beam (the phase center of the antenna 215). It is to be noted that the latter applies similarly to the radiation patterns illustrated by Fig. 5b and Fig. 6b. The radiation pattern 250 illustrates said dependence by means of a grayscale. The intensity strength (darkness) of the gray in a point of the surface indicates the field strength of radiation emitted by the antenna towards said point. The darker the gray, the higher is the field strength.

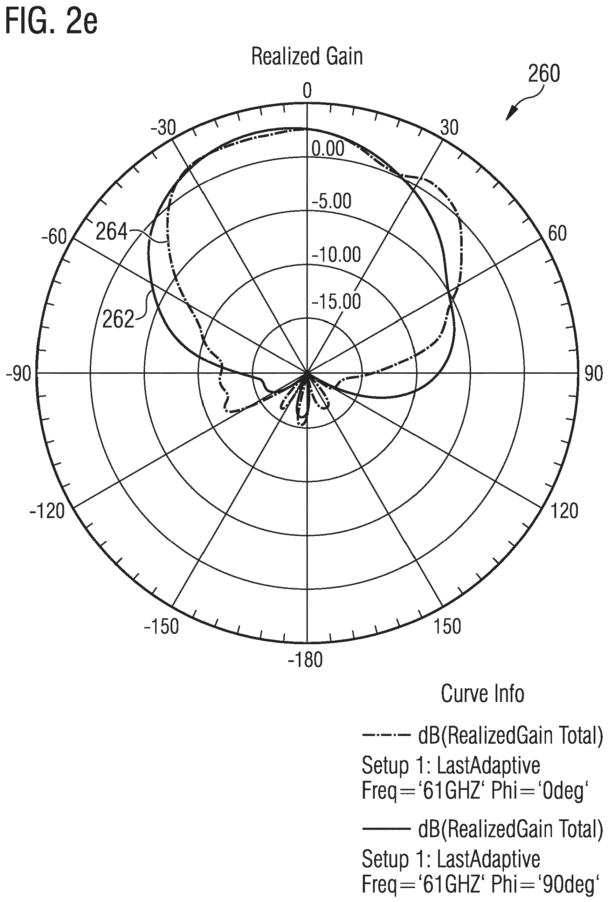

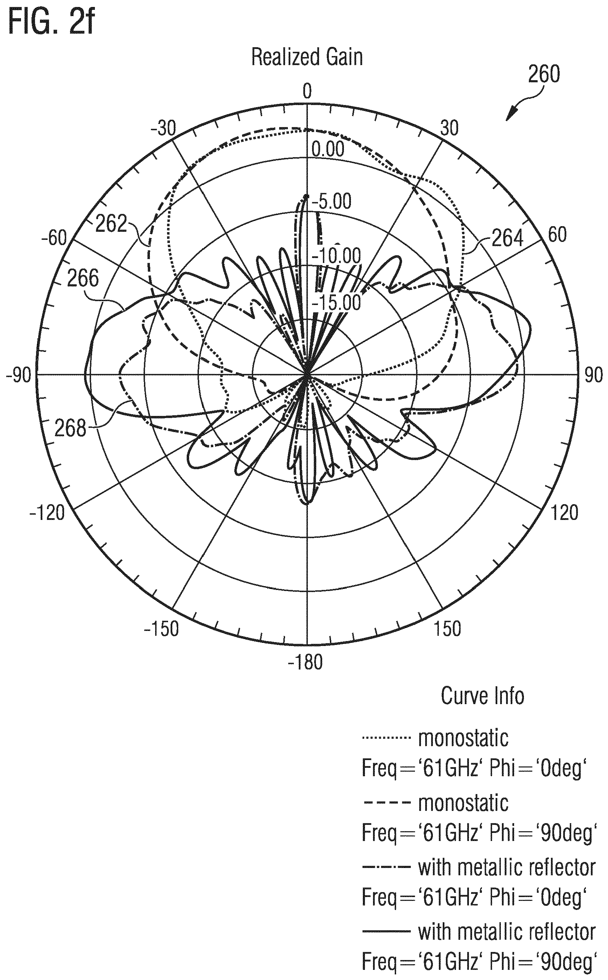

In Fig. 2b, the radiation pattern 250 for the radar system 200 as a standalone system, i.e., without the reflector 230, is shown. Thereby, the radiation pattern 250 exhibits a nearly spherical surface encompassing the phase center of the antenna 215. In Fig. 2b, the field strength of the radar beam is highest in a circular area around a vertical projection of the phase center onto the spherical surface, i.e., most of the radiation power is emitted upwards. This is also shown by **Fig. 2e** which illustrates a polar diagram 260 of a first directive gain 262 and a second directive gain 264 of the radar sensor 210 without reflector 230 in two vertical planes through the phase center orthogonal to one another, i.e., the polar diagram 260 of Fig. 2e represents two vertical cross sections of the radiation pattern 250 of Fig. 2b. A radial distance of a boundary point of the first directive gain 262 and the second directive gain 264 from the origin of the polar diagram 260 in any direction represents the field strength of radiation emitted in that direction. The higher the radial distance, the higher is the field strength for the corresponding direction. The field strength is represented logarithmically along the axis of the polar diagram 260, i.e., the polar diagram 260 has a logarithmic scale. It is to be noted, that the latter similarly applies to the polar diagrams illustrated by Fig. 2f, Fig. 5c and Fig. 6c.

The first directive gain 262 and the second directive gain 264 exhibit a main lobe whose extent mainly covers a range between -50° to +50° and elongates upwards (0°), i.e., most of the radiation power is emitted upwards and only little radiation power is distributed horizontally.

In Fig. 2d, the radiation pattern 250 for the radar system 200 with the reflector 230 is shown. The radiation pattern 250 is a spherical segment centered above the phase center and cut off by the surface of the reflector 230, i.e., the radiation pattern 250 forms a ring which circulates the phase center and is opened upwards. The field strength is highest in a horizontal plane through the tip of the reflector 230 and decreases with increasing distance to said horizontal plane. Since the reflector 230 has a rotationally symmetrical shape, the radiation power of the radar beam is distributed (nearly) uniformly over an angular range of 360° along the horizontal plane viewed from the phase center. The reflector 230, thus, enables a redirection of the radiation power towards the sides of the radar sensor 210. This is also shown by **Fig. 2f** which illustrates a polar diagram 260 of the first directive gain 262 and the second directive gain 264 of Fig. 2e and, additionally, of a third directive gain 266 and a fourth directive gain 268 of the radar sensor 210 with reflector 230 in the same two vertical planes like the ones of Fig. 2e. The third directive gain 266 and the fourth directive gain 268 show two similarly sized and shaped main lobes on opposing sides relative to a zero axis of the polar diagram 260. The main lobes extend mainly towards a range from +80° to +100° and -80° to -100°, i.e., the radiation power is mainly emitted laterally.

By using the reflector 230, the radar system 200 may increase a detection range in a horizontal plane around the radar sensor 210. Additionally, the radar system 200 may decrease a sensitivity of the radar sensor 210 for the main radiation direction of a setup without the reflector 230 (Fig. 2a and Fig. 2b).

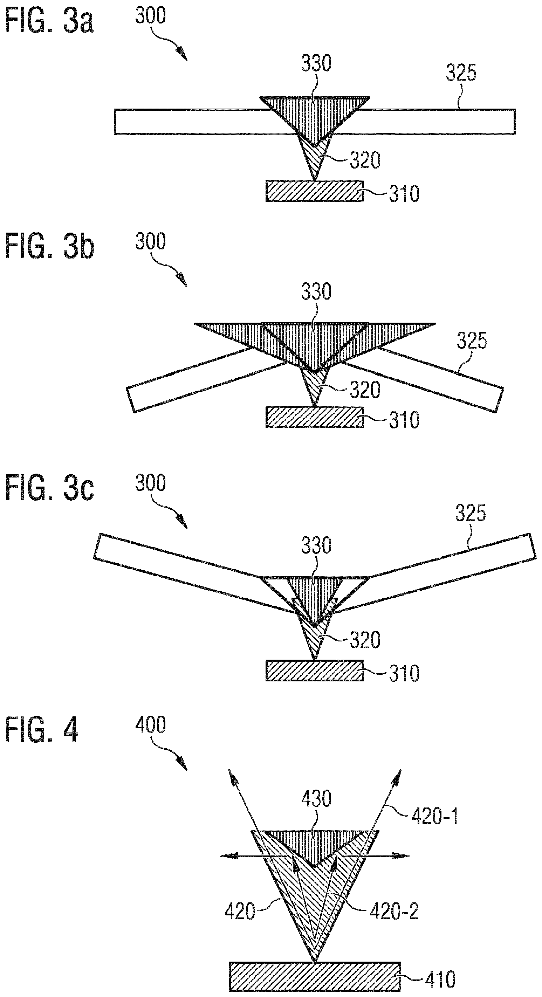

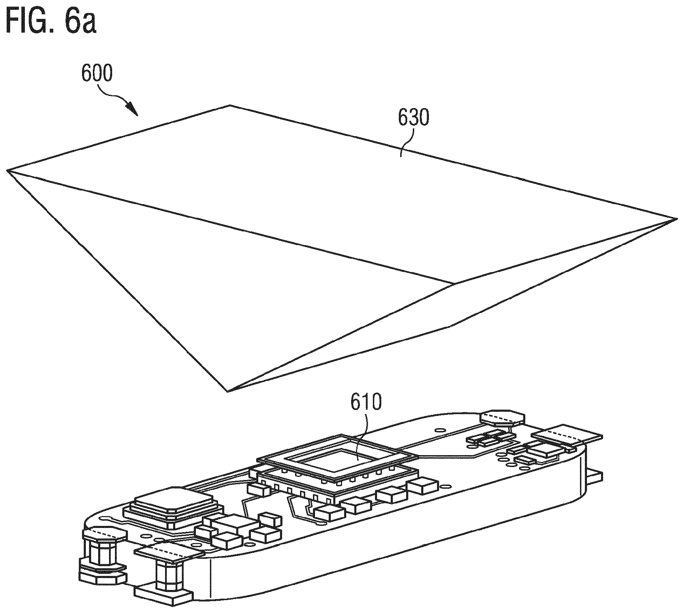

A direction of the reflected radar signal and, consequently, a position and shape of the target region may be mainly dependent on a shape and position of the reflector 230. Conversely, the shape and position of the reflector 230 may be modified to obtain an intended radiation pattern. In the example of Fig. 2a to Fig. 2f, the tilt angle between a trajectory outgoing from the reflector 230 and a trajectory of the initial radar beam is approximately 90°, resulting in a target region mainly extending along a horizontal plane around the radar sensor 210. Depending on requirements of a radar application, the preferred tilt angle may differ from 90°. The tilt angle may be adjusted by a suitable selection of a shape of the reflector 230, or more specifically, of an opening angle with which the reflector 230 tapers towards the radar sensor 210. This is further explained with reference to Fig. 3a to Fig. 3c. The shape and position of the target region may further be adjusted based on a suitable selection of the geometric shape and position of the reflector 230. The latter is further explained with reference to Fig. 5a to Fig. 5c and Fig. 6a to Fig. 6c.

**Fig. 3a** to **Fig. 3c** illustrate a sectional view of an example of a radar system 300 with different redirection angles between a radar beam 320 emitted by a radar sensor 310 and a reflected radar signal 325 after impinging on a reflector 330. The radar sensor 310 comprises an antenna configured to emit the radar beam 320 towards a predefined region. The reflector 330 is configured to redirect at least part of the radar beam 320 towards a target region different from the predefined region and to redirect a reflection of the radar beam 320 originating from the target region onto the radar sensor 310.

In Fig. 3a to Fig. 3c, a cross section of the reflector 330 is illustrated by a triangle, i.e., the reflector 330 may exhibit, e.g., a pyramidal, prismatic, or conic shape. In Fig. 3a, an opening angle of a tapering of the reflector 330 towards the radar sensor 310 may cause the redirection angle to range between approximately 60° to 90°, thus, causing the reflected radar signal 325 spreading mainly over a plane parallel to an emitting surface of the radar sensor 310. In Fig. 3b, the tapering is less pointed than that of Fig. 3a, i.e., the opening angle of the tapering is bigger, which causes the reflected radar signal 325 to be tilted towards a plane along the emitting surface (more downwards). In Fig. 3c, the tapering is more pointed than that of Fig. 3a, i.e., the opening angle of the tapering is smaller, which causes the reflected radar signal 325 to be tilted away from the plane along the emitting surface (more upwards).

By selecting a suitable shape of the reflector 330, any redirection angle may be realized. The redirection angle may define a position of the target region in a way that an imaginary line between a phase center of the antenna and any boundary point of the predefined region may be tilted with respect to an imaginary line between the phase center and any boundary point of the target region by an angle corresponding to the redirection angle. For instance, the imaginary line between the phase center of the antenna and any boundary point of the predefined region may be tilted by at least 10° with respect to the imaginary line between the phase center and any boundary point of the target region.

The radar system 300 may allow a redirection of the radar beam 320 towards a target region matching a particular radar application. The radar system 300 may provide simple means -by selecting a suitable shape of the reflector 330 - to adapt the target region to the radar application. The radar system 300 may enable detection of objects lateral to the radar sensor 310, e.g., along a plane parallel to an emitting surface of the radar sensor 310.

**Fig. 4** illustrates a sectional view of an example of a radar system 400. The radar system 400 comprises a radar sensor 410 configured to emit a radar beam 420 towards a predefined region. The radar system 400 comprises a reflector 430 configured to redirect at least part of the radar beam 420 towards a target region different from the predefined region.

Since the reflector 430 does not cover an entire beamwidth (extent) of the radar beam 420, some parts of the radar beam 420, e.g., a first trajectory 420-1 of the radar beam 420, partially passes the reflector 430 without being redirected, thus, the first trajectory 420-1 is not affected by the reflector 430 and points to the predefined region. Consequently, the radar system 400 may exhibit a sensitivity for the target region as well as for parts of the predefined region. In the example of Fig. 4, the radar system 400 may still be able to detect objects above the radar sensor 410, e.g., in a boundary area of the radar beam 120 protruding over the reflector 430.

The radar system 400 may allow a modification of a region for which the radar sensor 410 would - as a standalone system - be sensitive, i.e., the radar system 400 may enable an alignment of the field of view of the radar sensor 410 to a particular application. The radar system 400 may exclude entirely or partially an original field of view of the radar sensor 410 from detection and include a customizable target region into detection.

**Fig. 5a** and **Fig. 5b** illustrate a side view and an oblique top view, respectively, of an example of a radar system 500. The radar system 500 comprises a radar sensor 510 comprising an antenna configured to emit a radar beam towards a predefined region. The radar system 500 comprises a reflector 530 configured to redirect at least part of the radar beam towards a target region different from the predefined region.

The radar system 500 exhibits a configuration similar to the radar system 200 described above except that the reflector 530 is displaced with respect to a phase center of the antenna. More specifically, the reflector 530 is symmetrical with respect to a line of symmetry 560 and the line of symmetry 560 is displaced, e.g., by 5mm, with respect to a beam axis 565 through the phase center of the antenna. The reflector 530 is only slightly displaced such that it is at least partly placed in the predefined region, i.e., such that at least part of the radar beam impinges on the surface of the reflector 530.

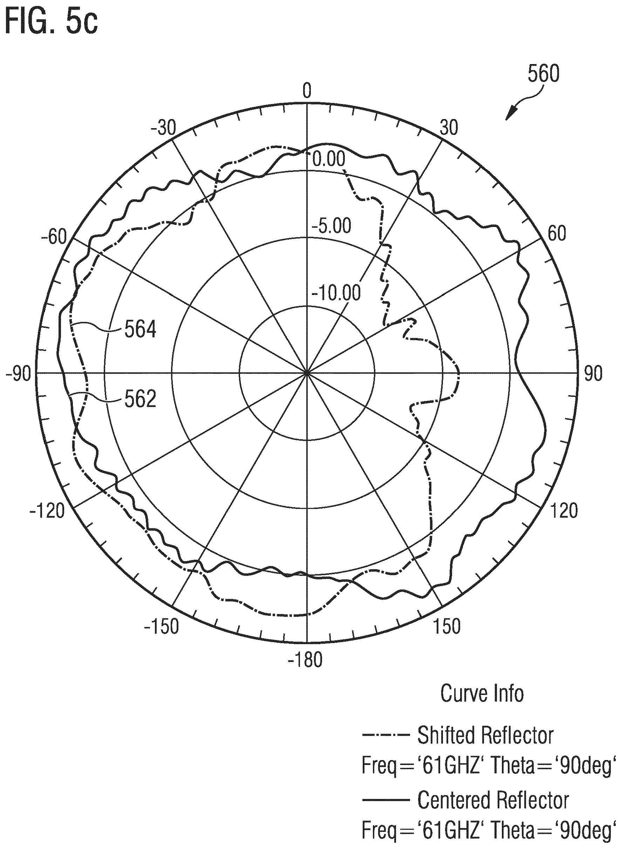

Fig. 5b additionally illustrates a three-dimensional radiation pattern 550 of the radar sensor 510. The radiation pattern 550 appears as a segment of a sphere encompassing the phase center and cut off by a surface of the reflector 530. The field strength of the radiation is especially high along a horizontal plane through the phase center, i.e., a radiation power of the radar beam is mainly focused on one side of the radar sensor 510. This is also shown by **Fig. 5c** which illustrates a polar diagram 560 of a first directive gain 562 of the radar sensor 210 of Fig. 2c with a centered reflector and a second directive gain 564 of the radar sensor 510 with the displaced reflector 530. The polar diagram 560 represents a horizontal plane through the phase center of the respective antenna. The first directive gain 562 shows an approximately uniform distribution of the radiation power over the entire angular range whereas the second directive gain 564 has a limited angular range from -180° to 0°.

A displacement of the reflector 530 relative to the phase center may cause a radiation power of the radar beam to be focused more on a particular side of the radar sensor 510. This effect may be used to shape the radiation pattern as desired. For example, in an application where an angular range of, e.g., 180° viewed from the phase center is required, the reflector 530 may be placed outside a centered position relative to the phase center. The radar system 500 may be useful for applications where a device comprising the radar system 500 has a fixed position and is placed close to an obstacle. Then, a focus of the radiation power away from the obstacle may be beneficial to increase a detection distance for a side of the radar sensor 510 opposing the obstacle.

**Fig. 6a** and **Fig. 6b** illustrate an oblique top view of an example of a radar system 600. The radar system 600 comprises a radar sensor 610 comprising an antenna configured to emit a radar beam towards a predefined region. The radar system 600 comprises a reflector 630 configured to redirect at least part of the radar beam towards a target region different from the predefined region.

The radar system 600 exhibits a configuration similar to the radar system 200 of Fig. 2c except that the reflector 630 exhibits a prismatic shape (shape of a triangular prism) centered above a phase center of the antenna. The tapering of the reflector 630 is an edge pointing towards the antenna. More specifically, the reflector 630 is symmetrical with respect to a line of symmetry and the line of symmetry extends through the phase center of the antenna.

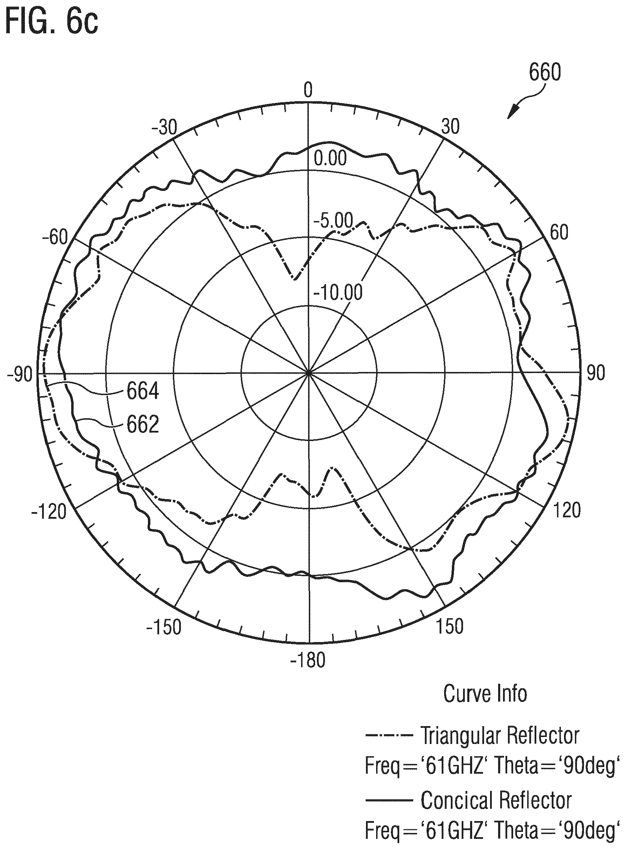

Fig. 6b additionally illustrates a three-dimensional radiation pattern 650 of the radar sensor 610. The radiation pattern 650 exhibits two separated spherical segments which are opposing with respect to the radar sensor 610. Accordingly, the resulting target region may comprise two subregions which are opposing with respect to the phase center of the antenna. This is also shown by **Fig. 6c** which illustrates a polar diagram 660 of a first directive gain 662 of the radar sensor 210 of Fig. 2c with a conical reflector and a second directive gain 664 of the radar sensor 610 with the prismatic reflector 630. The polar diagram 660 represents a horizontal plane through the phase center of the respective antenna. The first directive gain 662 shows an approximately uniform distribution of the radiation power over the entire angular range whereas the second directive gain 664 exhibits two opposing lobes with an angular range from approximately -30° to -150° and from +30° to +150°, respectively, thus, an angular range from -30° to +30° and from + 150 to -150° (clockwise) is excluded from detection.

The radar system 600 creates separated areas of radar coverage based on a geometry of the reflector 630. In other examples, a radar system according to the present disclosure may create any number of separated subregions for detection with any respective angular range. This may be advantageous for applications requiring certain regions to be excluded from detection or to focus radar power on certain regions of interest.

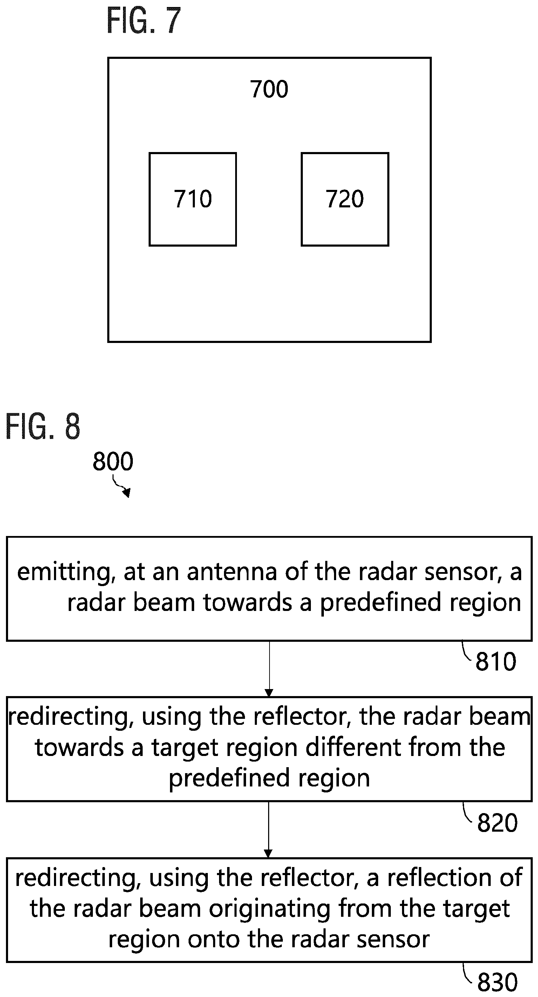

**Fig. 7** illustrates an electronic device 700 comprising a radar system 710 and control circuitry 720 configured to control an operation of the electronic device 700 based on an output signal of the radar system 710. The radar system 710 comprises a radar sensor and a reflector as described above, e.g., with reference to Fig. 1a and Fig. 1b. The radar sensor is configured to emit a radar beam to a predefined region. The reflector is configured to redirect at least part of the radar beam towards a target region.

The control circuitry 720 may be a single dedicated processor, a single shared processor, or a plurality of individual processors, some of which or all of which may be shared, a digital signal processor (DSP) hardware, an application specific integrated circuit (ASIC) or a field programmable gate array (FPGA). The control circuitry 720 may optionally be coupled to, e.g., read only memory (ROM) for storing software, random access memory (RAM) and/or non-volatile memory. The processing circuitry 720 is communicatively coupled to the radar system 710.

The electronic device 700 may be any device with a radar function. The electronic device 700 may be, e.g., a consumer device. The electronic device 700 may be, e.g., an audio equipment such as a speaker or a telecommunication device such as a television receiver.

The radar system 710 may be configured to determine at least one of presence, a movement, and a distance of an object in an environment of the electronic device 700. For instance, the redirected radar beam may impinge on the object and reflect back to the reflector which, then, redirects the reflection to the radar sensor. An antenna of the radar sensor may receive the reflection and generate the output signal based on the received reflection. The radar system 710 may, then, transfer the output signal to the control circuitry 720 for further processing.

The radar system 710 may be configured to determine the at least one of presence, the movement, and the distance of the object in an immediate surrounding of the electronic device 700, e.g., in a distance of up to a few meters (e.g., 4 or 5 meters) to the electronic device 700. The radar system 710 may be configured to detect presence of a user of the electronic device 700. For instance, the radar system 710 may be configured to determine whether a person is present in a certain area around the electronic device 700 and, optionally, determine whether that person approaches the electronic device 700 or moves away from the electronic device 700.

The control circuitry 720 may control the operation of the electronic device 700, e.g., by activating or deactivating a certain function of the electronic device 700 based on the output signal, e.g., a certain function may be activated if it is determined that a user of the electronic device 700 is present. For instance, the control circuitry 720 may, if it is determined that a user is close, skip key word activation or automatically play music, activate air-conditioning, heating or alike. The control circuitry 720 may monitor a distance to a user based on the output signal (follow-me function). The electronic device 700 may have a (wireless) connection to other electronic devices in its surrounding and communicate the distance to the other electronic devices in order to determine which of the electronic devices is closest to the user, e.g., for connecting a microphone of the determined electronic device with a mobile phone of the user for phone calls. The electronic device 700 may be a speaker and be connected to other speakers in its surrounding to enable a dynamic handover of an audio output to one of the speakers closest to the user.

The electronic device 700 may have a fixed orientation, e.g., a certain surface area of the electronic device 700 may be designed for an orientation to a certain direction, e.g., vertically upwards or downwards, or horizontally to a certain side. The orientation may be dependent on a surrounding where the electronic device 700 is operated, e.g., the electronic device 700 may be designed for an orientation away from an obstacle such as a wall or towards an area of interest inside a room. The radar system 710 may be integrated into a certain side of the electronic device 700, thus, the fixed orientation of the electronic device 700 may imply a similarly fixed orientation of the radar sensor.

The integration of the radar system 710 may be selected according to design considerations which may be opposed to the radar function, i.e., the orientation of the radar sensor may, per se, be impractical for the radar application. For instance, the radar system 710 may be integrated into a top side of the electronic device 700 resulting in an upward orientation of the radar sensor even though objects lateral to the electronic device 700 shall be detected. Or the radar function may require a target region differing from a field of view of the radar sensor, e.g., with an angular range of more than 120°. In such cases, the radar system 710 may overcome a limitation of a conventional radar system by providing the possibility to freely define the target region for matching the requirements of the radar function.

For instance, the radar system 710 may be configured to detect presence of a user in a proximity to the electronic device 700. The radar system 710 may be integrated into a top side of the electronic device 700, i.e., facing upwards. The reflector of the radar system 710 may provide a coverage of 360° around the electronic device 700, i.e., it may be capable of detecting a user lateral to the electronic device 700 in any direction.

In some scenarios, a position of the electronic device 700 may be intended to be mostly fixed and a limited target region in front of the electronic device 700 may be relevant for monitoring presence of a user. In other scenarios, the electronic device 700 may be expected to be placed centered inside a room or, potentially, be moved with respect to its position and orientation. For any of those scenarios, the radar system 710 may provide a suitable method for detection of an object in an area of interest without the use of multiple sensors, reducing costs and power consumption of the electronic device 700.

The radar system 710 may also prevent unwanted detection of objects by excluding certain regions around the electronic device 700 from detection. For instance, the radar system 710 may suppress an unwanted detection of movements of, e.g., a fan on the ceiling or a cleaning robot and pet on the floor, without extensive data processing effort or efficiency loss. The radar system 710 may allow immunity to detection of objects in an original field of view of the radar sensor. Besides, the radar system 710 may increase a sensitivity of the radar sensor for a desired target region different from a field of view of the radar sensor.

Using the radar system 710 may especially be beneficial for applications requiring a wide detection range over a solid angle of more than 120° with a high sensitivity for the boundary area of the detection range. A conventional approach to fulfill this requirement may be the use of multiple radar sensors, e.g., 3 or 4 sensors: Each of the radar sensors may cover a limited part of the total target region. Another conventional approach may be the use of a sensor with multiple channels where each channel is connected to a respective antenna. The antennas may be placed such that each of the antenna may cover a limited part of the total target region. In contrast to the conventional approach, the radar system 710 may decrease hardware costs, space inside the electronic device 700 and power consumption. Since only one antenna may be required, a use of a monostatic radar sensor may additionally be advantageous for saving space, e.g., in high-frequency application and when the radar sensor is integrated into a package or chip. A simple geometry of the reflector may be suitable for most applications; thus, the fabrication of the reflector may be fast and cost-effective.

Another approach to fulfill the aforementioned requirement could be a radar sensor coupled to a dielectric or metallic waveguide. The dielectric waveguide may redirect the radar beam to a target region. Compared to the latter approach, the reflector of the radar system 710 may be simpler to fabricate. Besides, the radar system 710 may be operable with a common radar sensor whereas matching issues may occur when using the waveguide.

**Fig. 8** illustrates a flowchart of an example of a method 800 for operating a radar system, such as the radar system 100 described above, comprising a radar sensor and a reflector spaced apart from the radar sensor and symmetrical with respect to a line of symmetry or a plane of symmetry. The line of symmetry or the plane of symmetry is parallel to a beam axis of a radar beam The line of symmetry or the plane of symmetry is displaced with respect to a phase center of the antenna. The method 800 comprises emitting 810, at an antenna of the radar sensor, the radar beam towards a predefined region, redirecting 820, using the reflector, the radar beam towards a target region different from the predefined region, and redirecting 830, using the reflector, a reflection of the radar beam originating from the target region onto the radar sensor.

More details and aspects of the method 800 are explained in connection with the proposed technique or one or more examples described above, e.g., with reference to Fig. 1a and Fig. 1b. The method 800 may comprise one or more additional optional features corresponding to one or more aspects of the proposed technique, or one or more examples described above.

Methods and apparatuses disclosed herein may provide a simple and cost-effective adjustment of a field of view of a radar sensor to match requirements of a particular radar application. For instance, the methods and apparatuses may enable a detection of objects lateral to the radar sensor. Additionally, the methods and apparatuses may enable immunity of the radar sensor to certain parts of the original field of view of the radar sensor without substantially worsen the power efficiency of the radar sensor.

## Claims

1. A radar system (100) comprising:
a radar sensor (110) comprising an antenna configured to emit a radar beam (120) towards a predefined region; and
a reflector (130) spaced apart from the radar sensor (110) and symmetrical with respect to a line of symmetry or a plane of symmetry, wherein the line of symmetry or the plane of symmetry is parallel to a beam axis of the radar beam (120), wherein the reflector (130) is configured to:
redirect at least part of the radar beam (120) towards a target region different from the predefined region; and
redirect a reflection of the radar beam (120) originating from the target region onto the radar sensor (110);
the radar system (100) being **characterized by** the line of symmetry or the plane of symmetry being displaced with respect to a phase center of the antenna.

2. The radar system (100) of claim 1, wherein the radar sensor (110) is a monostatic radar sensor, and wherein the reflector (130) redirects the reflection of the radar beam (120) onto the antenna.

3. The radar system (100) of claim 1 or 2, wherein the reflector (130) tapers towards the radar sensor (110).

4. The radar system (100) of any one of the previous claims, wherein the reflector (130) tapers towards an apex or an edge oriented towards the radar sensor (110).

5. The radar system (100) of any one of the previous claims, wherein the reflector (130) comprises an outer surface configured to redirect the at least part of the radar beam (120) and the reflection of the radar beam (120), and
wherein at least the outer surface of the reflector (130) is metallic.

6. The radar system (100) of any one of the previous claims, wherein the reflector (130) spatially extends over an entire beamwidth of the radar beam (120).

7. The radar system (100) of any one of the previous claims, wherein an imaginary line between a phase center of the antenna and any boundary point of the predefined region is tilted by at least 10 degrees with respect to an imaginary line between the phase center and any boundary point of the target region.

8. The radar system (100) of any one of the previous claims, wherein the antenna comprises an emitting surface configured to emit the radar beam (120), and
wherein the target region extends over at least 120 degrees along a plane parallel to the emitting surface when viewed from a phase center of the antenna.

9. The radar system (100) of any one of the previous claims, wherein the radar sensor (110) is configured to determine, based on the reflection of the radar beam (120), at least one of presence, a movement, and a distance of an object in an environment of the radar system (100).

10. An electronic device (700) comprising:
a radar system (710) according to any one of claims 1 to 9; and
control circuitry (720) configured to control an operation of the electronic device (700) based on an output signal of the radar system (710).

11. A method (800) for operating a radar system according to claim 1, the method (800) comprising:
emitting (810), at the antenna of the radar sensor, a radar beam towards a predefined region,
wherein the line of symmetry or the plane of symmetry is parallel to a beam axis of the radar beam;
redirecting (820), using the reflector, the radar beam towards a target region different from the predefined region; and
redirecting (830), using the reflector, a reflection of the radar beam originating from the target region onto the radar sensor.

## Patentansprüche

1. Radarsystem (100), umfassend:
einen Radarsensor (110), der eine Antenne umfasst, die dazu ausgelegt ist, einen Radarstrahl (120) in Richtung eines vordefinierten Gebiets zu emittieren; und
einen Reflektor (130), der von dem Radarsystem (110) beabstandet und bezüglich einer Symmetrielinie oder einer Symmetrieebene symmetrisch ist, wobei die Symmetrielinie oder die Symmetrieebene parallel zu einer Strahlachse des Radarstrahls (120) ist, wobei der Reflektor (130) ausgelegt ist zum:
Umlenken zumindest eines Teils des Radarstrahls (120) in Richtung eines Zielgebiets, das sich von dem vordefinierten Gebiet unterscheidet; und
Umlenken einer Reflexion des Radarstrahls (120), die vom Zielgebiet stammt, auf den Radarsensor (110);
wobei das Radarsystem (100) **dadurch gekennzeichnet ist, dass** die Symmetrielinie oder die Symmetrieebene bezüglich eines Phasenzentrums der Antenne versetzt ist.

2. Radarsystem (100) nach Anspruch 1, wobei der Radarsensor (110) ein monostatischer Radarsensor ist, und wobei der Reflektor (130) die Reflexion des Radarstrahls (120) auf die Antenne umlenkt.

3. Radarsystem (100) nach Anspruch 1 oder 2, wobei sich der Reflektor (130) in Richtung des Radarsensors (110) verjüngt.

4. Radarsystem (100) nach einem der vorstehenden Ansprüche, wobei sich der Reflektor (130) in Richtung einer Spitze oder einer Kante, die in Richtung des Radarsensors (110) orientiert ist, verjüngt.

5. Radarsystem (100) nach einem der vorstehenden Ansprüche, wobei der Reflektor (130) eine Außenfläche umfasst, die dazu ausgelegt ist, den zumindest Teil des Radarstrahls (120) und die Reflexion des Radarstrahls (120) umzulenken, und
wobei zumindest die Außenfläche des Reflektors (130) metallisch ist.

6. Radarsystem (100) nach einem der vorstehenden Ansprüche, wobei sich der Reflektor (130) räumlich über eine gesamte Strahlbreite des Radarstrahls (120) erstreckt.

7. Radarsystem (100) nach einem der vorstehenden Ansprüche, wobei eine imaginäre Linie zwischen einem Phasenzentrum der Antenne und einem beliebigen Grenzpunkt des vordefinierten Gebiets um mindestens 10 Grad bezüglich einer imaginären Linie zwischen dem Phasenzentrum und einem beliebigen Grenzpunkt des Zielgebiets geneigt ist.

8. Radarsystem (100) nach einem der vorstehenden Ansprüche, wobei die Antenne eine emittierende Oberfläche umfasst, die dazu ausgelegt ist, den Radarstrahl (120) zu emittieren, und
wobei sich das Zielgebiet über mindestens 120 Grad entlang einer Ebene parallel zu der emittierenden Oberfläche erstreckt, wenn von einem Phasenzentrum der Antenne aus gesehen.

9. Radarsystem (100) nach einem der vorstehenden Ansprüche, wobei der Radarsensor (110) dazu ausgelegt ist, basierend auf der Reflexion des Radarstrahls (120) mindestens eines von einem Vorhandensein, einer Bewegung und einer Entfernung eines Objekts in einer Umgebung des Radarsystems (100) zu bestimmen.

10. Elektronische Vorrichtung (700), umfassend:
ein Radarsystem (710) nach einem der Ansprüche 1 bis 9; und
eine Steuerschaltungsanordnung (720), die dazu ausgelegt ist, einen Betrieb der elektronischen Vorrichtung (700) basierend auf einem Ausgangssignal des Radarsystems (710) zu steuern.

11. Verfahren (800) zum Betreiben eines Radarsystems nach Anspruch 1,
wobei das Verfahren (800) umfasst:
Emittieren (810), an der Antenne des Radarsensors, eines Radarstrahls in Richtung eines vordefinierten Gebiets,
wobei die Symmetrielinie oder die Symmetrieebene parallel zu einer Strahlachse des Radarstrahls ist;
Umlenken (820), unter Verwendung des Reflektors, des Radarstrahls in Richtung eines Zielgebiets, das sich von dem vordefinierten Gebiet unterscheidet; und
Umlenken (830), unter Verwendung des Reflektors, einer Reflexion des Radarstrahls, die von dem Zielgebiet stammt, auf den Radarsensor.

## Revendications

1. Système radar (100) comprenant :
un capteur radar (110) comprenant une antenne configurée pour émettre un faisceau radar (120) vers une région prédéfinie ; et
un réflecteur (130) espacé du capteur radar (110) et symétrique par rapport à une ligne de symétrie ou un plan de symétrie, dans lequel la ligne de symétrie ou le plan de symétrie est parallèle à un axe de faisceau du faisceau radar (120), dans lequel le réflecteur (130) est configuré pour :
rediriger au moins une partie du faisceau radar (120) vers une région cible différente de la région prédéfinie ; et
rediriger une réflexion du faisceau radar (120) provenant de la région cible vers le capteur radar (110) ;
le système radar (100) étant **caractérisé en ce que** la ligne de symétrie ou le plan de symétrie est déplacé par rapport à un centre de phase de l'antenne.

2. Système radar (100) selon la revendication 1, dans lequel le capteur radar (110) est un capteur radar 0monostatique, et dans lequel le réflecteur (130) redirige la réflexion du faisceau radar (120) vers l'antenne.

3. Système radar (100) selon la revendication 1 ou 2, dans lequel le réflecteur (130) se rétrécit vers le capteur radar (110).

4. Système radar (100) selon l'une quelconque des revendications précédentes, dans lequel le réflecteur (130) se rétrécit vers un sommet ou un bord orienté vers le capteur radar (110).

5. Système radar (100) selon l'une quelconque des revendications précédentes, dans lequel le réflecteur (130) comprend une surface extérieure configurée pour rediriger ladite au moins une partie du faisceau radar (120) et la réflexion du faisceau radar (120), et
dans lequel au moins la surface extérieure du réflecteur (130) est métallique.

6. Système radar (100) selon l'une quelconque des revendications précédentes, dans lequel le réflecteur (130) s'étend spatialement sur la totalité d'une largeur de faisceau du faisceau radar (120).

7. Système radar (100) selon l'une quelconque des revendications précédentes, dans lequel une ligne imaginaire entre un centre de phase de l'antenne et un point limite quelconque de la région prédéfinie est inclinée d'au moins 10 degrés par rapport à une ligne imaginaire entre le centre de phase et un point limite quelconque de la région cible.

8. Système radar (100) selon l'une quelconque des revendications précédentes, dans lequel l'antenne comprend une surface émettrice configurée pour émettre le faisceau radar (120), et
la région cible s'étend sur au moins 120 degrés le long d'un plan parallèle à la surface émettrice lorsqu'elle est vue depuis un centre de phase de l'antenne.

9. Système radar (100) selon l'une quelconque des revendications précédentes, dans lequel le capteur radar (110) est configuré pour déterminer, sur la base de la réflexion du faisceau radar (120), au moins l'un d'une présence, d'un mouvement et d'une distance d'un objet dans un environnement du système radar (100).

10. Dispositif électronique (700) comprenant :
un système radar (710) selon l'une quelconque des revendications 1 à 9 ; et
un circuit de commande (720) configuré pour commander un fonctionnement du dispositif électronique (700) sur la base d'un signal de sortie du système radar (710).

11. Procédé (800) pour faire fonctionner un système radar selon la revendication 1,
le procédé (800) comprenant :
l'émission (810), au niveau de l'antenne du capteur radar, d'un faisceau radar vers une région prédéfinie,
dans lequel la ligne de symétrie ou le plan de symétrie est parallèle à un axe du faisceau radar ;
la redirection (820), au moyen du réflecteur, du faisceau radar vers une région cible différente de la région prédéfinie ; et
la redirection (830), au moyen du réflecteur, d'une réflexion du faisceau radar provenant de la région cible vers le capteur radar.
